# EUROPÄISCHE PATENTSCHRIFT

(11) **EP 0 708 780 B1**
(45) Veröffentlichungstag und Bekanntmachung des Hinweises auf die Patenterteilung: **05.03.1997**
(21) Anmeldenummer: 94919654.7
(22) Anmeldetag: 22.06.1994
(51) Int. Cl.: C07F 9/09, C08G 77/08, C07F 9/06, C08G 77/30

(54) **KATALYSATOR ZUR HERSTELLUNG VON ORGANOSILOXANEN ODER POLYORGANOSILOXANEN**
CATALYST FOT THE PRODUCTION OF ORGANOSILOXANES AND POLYORGANOSILOXANES
CATALYSEUR POUR LA FABRICATION D'ORGANOSILOXANES ET DE POLYORGANOSILOXANES

(30) Priorität: 10.07.1993 DE 4323183; 10.07.1993 DE 4323184; 10.07.1993 DE 4323185; 27.12.1993 DE 4344664
(43) Veröffentlichungstag der Anmeldung: 01.05.1996
(73) Patentinhaber: Hüls Silicone Gesellschaft mit beschränkter Haftung, 01612 Nünchritz (DE)
(72) Erfinder: SCHICKMANN, Harald, D-01662 Meissen (DE); LEHNERT, Robert, D-01069 Dresden (DE); WENDT, Heinz-Dieter, D-01445 Radebeul (DE); RAUTSCHEK, Holger, D-01612 Nünchritz (DE); RÖSLER, Harald, D-01129 Dresden (DE); SREBNY, Hans-Günther, D-48249 Dülmen (DE)
(74) Vertreter: Zöllner, Gudrun
(86) Internationale Anmeldenummer: EP9402032
(87) Internationale Veröffentlichungsnummer: WO9501983

(56) Entgegenhaltungen:
- EP-A- 0 305 737
- EP-A- 0 394 918
- GB-A- 2 252 975
- US-A- 4 720 533
- US-A- 5 089 450
- US-A- 5 099 051

## Beschreibung

### Technisches Gebiet

Die Erfindung betrifft einen Katalysator zur Herstellung von Organosiloxanen oder Polyorganosiloxanen, die vorrangig durch Polykondensationsverfahren erhalten werden. Der erfindungsgemäße Katalysator ist ein Umsetzungsprodukt von Phosphornitrilchlorid mit einer Verbindung der allgemeinen Formel [R₃SiO(R₂SiO)ₘ]₃P=O (I), worin R unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 1000 annimmt. Sich während der Umsetzung bildende, leichtflüchtige, Chlor enthaltende Silicium-Verbindungen können bei Bedarf vollständig oder teilweise abgetrennt werden. Organosiloxane und Polyorganosiloxane sind wichtige Zwischen- und Endprodukte der Siliciumchemie.

### Stand der Technik

Zur Herstellung von Organosiloxanen und Polyorganosiloxanen sind für technische Anwendungen im wesentlichen zwei verschiedene chemische Grundverfahren bekannt.

Das eine Verfahren ist die ringöffnende Polymerisation von cyclischen Polysiloxanen, verbunden mit dem Einbau von mono-, di-und/oder trifunktionellen Siliciumverbindungen, auch unter dem Begriff der Äquilibrierung bekannt. Diese Reaktion verläuft aber nur bis zu einem chemischen Gleichgewicht, bei welchem neben etwa 87 Gew.-% linearen Polysiloxanen etwa 13 Gew.-% Cyclosiloxane vorliegen. Diese müssen in einem anschließenden Verfahrensschritt abgetrennt werden.

Beim zweiten Verfahrcn wird von niedermolekularen (oligomeren), Silcxanen, welche OH-Gruppen enthalten, ausgegangen und diese einer Polykondensationsreaktion unterzogen. Auch hierbei ist der Einbau von mono-, di- und/oder trifunktionellen Siliciumverbindungen möglich. Der Bildung cyclischer Siloxane wird versucht durch geeignete Katalysatoren entgegenzuwirken, um eine zusätzliche Abtrennung der Cyclen zu vermeiden.

Für beide Verfahrensweisen werden üblicherweise basische oder saure Katalysatoren verwendet. Als basische Katalysatoren sind u. a. Kaliumhydroxid, Kaliumsiloxanolate oder Ammonium- und Phosphoniumsiloxanolate bekannt. Zur Gruppe der sauren Katalysatoren gehören beispielsweise Schwefelsäure, Trifluormethansulfonsäure, saure Ionenaustauscherharze, säureaktivierte Bleicherden und Phosphornitrilchloride.

Die meisten Katalysatoren, die für Polykondensationsreaktionen von Silanolen und Siloxanolen von Bedeutung sind, bewirken auch eine mehr oder weniger schnell ablaufende Äquilibrierungsreaktion, was die Bildung von cyclischen Siloxanen zur Folge hat.

Auf Grund ihrer hohen Aktivität neben einer guten Selektivität, es findet nahezu keine Äquilibrierung statt, sind Phosphornitrilchloride als Katalysatoren für Polykondensationsreaktionen von Silanolen und Siloxanolen sehr gut geeignet.

Phosphornitrilchloride und diese enthaltende Zusammensetzungen sind bekannt (Nitzsche et al. DE-AS 1 279 019, Nitzsche et al. US-PS 3839388). Als Lösungsmittel werden z.B. Benzol, Toluol, Petrolether, Halogenkohlenwasserstoffe, Ether und Ketone vorgeschlagen (Triem et al. US-PS 3652711).

In unpolaren Lösungsmitteln, wie z. B. aliphatischen und aromatischen Kohlenwasserstoffen, sind Phosphornitrilchloride jedoch nur sehr gering löslich. Das hat den Nachteil, daß die Phosphornitrilchloride aufgrund ihrer sehr niedrigen Konzentration in den Lösungen besonders anfällig gegen Verunreinigungen bzw. gegen Hydrolyse sind. Deshalb haben derartige Lösungen oft nur eine geringe Lagerstabilität, und die Aktivität des Katalysators läßt schnell nach.

Lösungsmittel wie Ether, Ketone und Ester sind nicht vollständig inert gegenüber den Phosphornitrilchloriden, was ebenfalls zu einer Desaktivierung des Katalysators unter Dunkelfärbung der gesamten Lösung führt.

Eine weitere Variante zur Herstellung von Phosphornitrilchloridlösungen ist die Verwendung von Tensiden oder Kronenethern als Lösungsvermittler z.B. zum Essigsäureethylester (Schuster, J. et al. EP 381 204). Hierbei ist die Herstellung der Katalysatorlösung ein aufwendiger, mehrstufiger Prozeß. Bei der nachfolgenden Herstellung der Polyorganosiloxane verbleiben die eingesetzten Tenside bzw. Kronenether im Produkt und können bei der Weiterverarbeitung des Polymers stören. Außerdem kommt es nach längerer Standzeit der Katalysatorlösung zur Esterspaltung und damit zur Zersetzung des Lösungsmittels.

Einer Lösung des Phosphornitrilchlorides in einem organischen Lösungsmittel steht demnach in den meisten Fällen entweder die schlechte Lösichkeit oder die Reaktivität des Phosphornitrilchlorides entgegen. Als sehr gute Lösungsmittel sind Chlorkohlenwasserstoffe, wie z. B. Methylenchlorid, bekannt, die aber wegen ihrer Toxizität nicht zur Anwendung kommen sollten.

Es wurde deshalb vorgeschlagen, die Kohlenwasserstoffe zu substituieren, beispielsweise durch anorganische oder organische Säurehalogenide (DE 42 21 854), durch SiCl-haltige Verbindungen (DE 43 23 186, DE 43 23 188) oder durch cyclische Siloxane (DE 37 25 377). Diese Varianten haben aber den Nachteil, daß die Viskosität der Produkte, aufgrund von Hydrolyse und anschließender Kondensation der SiCl-Reste unter dem Einfluß von Feuchtigkeit, rasch ansteigt und diese dann nicht mehr dosierbar sind.

Für spezielle Anwendungen von Polysiloxanen bzw. der daraus hergestellten Produkte ist ein zu hoher Gehalt an Chlor enthaltenden Verbindungen ungünstig. Insbesondere werden an Produkte, die in der Medizin und Medizintechnik sowie in der Elektrotechnik und Elektronik eingesetzt werden, sehr hohe Reinheitsanforderungen gestellt. Auch in anderen Branchen ist die Höhe des Chlorgehaltes in den eingesetzten Produkten wegen der Bildung toxischer Stoffe bei eventuellen Bränden entscheidend.

Katalysatoren, bei denen, ausgehend vom Phosphornitrilchlorid, der Chlorgehalt beliebig variiert werden kann und die sich hervorragend für die Herstellung von Organosiloxanen oder Polyorganosiloxanen eignen, sind nicht bekannt.

### Darstellung der Erfindung

Aufgabe der Erfindung war es, einen hochwirksamen Katalysator für die Herstellung von Organosiloxanen und Polyorganosiloxanen, die vorrangig durch Kondensationsationsverfahren hergestellt werden, aufzufinden, dessen Chlorgehalt bei Bedarf gezielt einstellbar ist, der sich in den Ausgangsstoffen homogen löst, lösungsmittelfrei ist sowie eine hohe Stabilität bezüglich Viskosität und Aktivität aufweist.

Erfindungsgemäß stellt der Katalysator ein Umsetzungsprodukt von Phosphornitrilchlorid mit einer Verbindung der allgemeinen Formel

[R₃SiO(R₂SiO)ₘ]₃P=O (I),

worin R unabhängig voneinander gleiche oder verschiedene ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 1000 annimmt, dar, wobei es möglich ist, sich während der Umsetzung bildende, leichtflüchtige, Chlor enthaltende Silicium-Verbindungen vollständig oder teilweise abzutrennen.

Die Umsetzung des Phosphornitrilchlorid mit der Verbindung der allgemeinen Formel

[R₃SiO(R₂SiO)ₘ]₃P=O (I),

kann sowohl bei Raumtemperatur als auch bei erhöhter Temperatur erfolgen. Bei höheren Temperaturen können jedoch Siloxanspaltungen auftreten.

Die eingesetzte Verbindung der allgemeinen Formel

[R₃SiO(R₂SiO)ₘ]₃P=O (I),

kann beispielsweise im Fall von m = 0 [Tris(triorganosilyl)phosphat] erhalten werden durch Umsetzung von einem Triorganohalogensilan, wie z. B. Trimethylchlorsilan oder Dimethylvinylchlorsilan, mit Orthophosphorsäure in äquivalenten Mengen, wobei in der Orthophosphorsäure enthaltenes Wasser durch das Triorganohalogensilan gebunden wird. Zur Herstellung der Verbindung mit m größer 0, wobei m ganze oder gebrochenen Zahlen annehmen kann [Tris(triorganosiloxypolydiorganosiloxanyl)phosphat], wird das erhaltene Tris(triorganosilyl)phosphat mit einem oder mehreren Organocyclosiloxanen der allgemeinen Formel (R₂SiO)_{q} (II), worin R unabhängig voneinander gleiche oder verschiedene gesättigte und/oder ungesättigte einwertige Kohlenwasserstoffreste mit 1 bis 6 Kohlenstoffatomen bedeutet und q Werte von 3 bis 6 annimmt, umgesetzt.

Die benötigten cyclischen Siloxane werden z. B. hergestellt durch alkalische Depolymerisation von bei der Hydrolyse von Diorganodichlorsilanen entstehenden Produkten. Sie bestehen zum überwiegenden Teil aus Octaorganocyclotetrasiloxan (D₄). Üblicherweise wird das erhaltene Gemisch oder ein spezielles Cyclosiloxan eingesetzt.

Es ist jedoch auch möglich, die Verbindung der allgemeinen Formel (I) nach jedem anderen bekannten Verfahren herzustellen.

Vorteilhafterweise wird für die Herstellung des Katalysators ein Tris(triorganosiloxypolydiorganosiloxanyl)phosphat der allgemeinen Formel (I) mit einem Verhältnis von Trialkylsiloxy- zu Dialkylsiloxy-Einheiten eingesetzt, welches dem eines Polyorganosiloxans mit Trialkylsiloxyendgruppen einer Viskosität von beispielsweise 50 bis 10 000 mPas, vorzugsweise von ca. 1000 mPas, entspricht. Damit ist es möglich, beliebige katalytische Aktivitäten, unabhängig von der Viskosität des Katalysators einzustellen.

Das verwendete Phosphornitrilchlorid besteht im wesentlichen aus Verbindungen bzw. Gemischen dieser Verbindungen der allgemeinen Formel [Cl₃PN(PCl₂N)ₓPCl₃]+*[P_{y}Cl_{5y+1}]⁻, worin x eine ganze Zahl größer/gleich 0 und y = 0 oder 1 bedeutet. Es wird beispielsweise erhalten durch Reaktion von 2 Mol Phosphorpentachlorid mit 1 Mol Ammonuimchlorid gem. US 3 839 388. Phosphornitrilchlorid ist mit Tris(triorganosiloxypolyorganosiloxanyl)phosphat der allgemeinen Formel [R₃SiO(R₂SiO)ₘ]₃P=O (I) in jedem Verhältnis umsetzbar. Es kann als reiner Feststoff oder als Lösung, z. B. in Methylenchlorid gelöst, umgesetzt werden, wobei jedoch bei Verwendung einer Lösung das Lösungsmittel nach der Umsetzung, beispielsweise gemeinsam mit den leichtflüchtigen, Chlor enthaltenden Silicium-Verbindungen, entfernt werden muß.

Im Fall des Abtrennens von sich während der Umsetzung bildender, leichtflüchtiger, Chlor enthaltender Silicium-Verbindungen werden hauptsächlich Verbindungen der allgemeinen Formel ClSiR₂(OSiR₂)ₓCl und/oder der allgemeinen Formel ClSiR₃, worin R die oben angeführte Bedeutung hat und x Werte zwischen 1 und 20 annimmt, abgetrennt, beispielsweise Trimethylchlorsilan. Diese Verbindungen können vollständig oder teilweise aus dem Reaktionsgemisch entfernt werden. Zweckmäßigerweise erfolgt die Abtrennung durch Destillation bei Temperaturen zwischen 20 und 100 °C, vorzugsweise zwischen 40 und 80 °C, sowie bei Normaloder reduziertem Druck, bevorzugt bei 1 bis 50 hPa.

Durch Abtrennung der sich während der Umsetzung bildenden, leichtflüchtigen, Chlor enthaltenden Silicium-Verbindungen ist es möglich, den Chlor-Gehalt des Katalysators beliebig um 1 bis 95 Gew.-%, vorzugsweise um 10 bis 60 Gew.-%, bezogen auf die eingesetzte Menge Chlor im Phosphornitrilchlorid, zu verringern.

Der erfindungsgemäße Katalysator kann vor seiner Verwendung mit Organosiloxanen oder Polyorganosiloxanen, die keine kondensierbaren funktionellen Gruppen, wie z. B. OH- oder Alkoxygruppen, enthalten dürfen, auf die Einsatzkonzentration eingestellt werden. Diese Organosiloxane können Ausgangstoffe oder Produkte der Kondensationsreaktion sein. Gut geeignet sind beispielsweise cyclische oder lineare Organosiloxane bis zu einer Viskosität von 1000 mPas. Damit ist es möglich, ein lagerstabiles Katalysatorkonzentrat bereitzustellen, das vor der Anwendung auf die gewünschte Konzentration verdünnt werden kann und nicht vor jeder Anwendung neu herzustellen ist. Das Konzentrat weist, ebenso wie die verdünnteren Lösungen, eine ausgezeichnete Stabilität hinsichtlich Viskosität und Aktivität auf.

Der erfindungsgemäße Katalysator ist hervorragend geeignet zur Herstellung von Organosiloxanen oder Polyorganosiloxanen durch Kondensation und/oder Äquilibrierung von einer oder mehreren Siliciumverbindungen der allgemeinen Formel

R¹ ₐ(R²O)_{b}SiO_{(4-a-b)/2} (III),

wobei R¹ gleiche oder verschiedene, gesättigte und/oder ungesättigte, substituierte und/oder unsubstituierte einwertige Kohlenwasserstoffreste mit 1 bis 30 Kohlenstoffatomen oder Wasserstoff mit der Maßgabe bedeutet, daß nur ein Wasserstoff pro Silicium gebunden ist, R² entweder Wasserstoff oder R¹ darstellt und (a+b) ganze oder gebrochene Zahlen größer 1 bedeutet, wobei mindestens ein Sauerstoff pro Molekül am Silicium gebunden ist. Er wird üblicherweise in Mengen von 1 Gew.-ppm bis 1 Gew.-%, bezogen auf das Gewicht der jeweils verwendeten Menge an Polyorganosiloxanen, eingesetzt. Bevorzugt werden 1 bis 50 Gew.-ppm an Katalysator, bezogen auf die Menge Phosphornitrilchlorid, die bei der Umsetzung mit der Verbindung der allgemeinen Formel (I) eingesetzt wird, verwendet.

Beispielsweise können Polyorganosiloxane, die Silanolgruppen aufweisen, miteinander oder mit Polyorganosiloxanen, die Triorganosiloxyendgruppen aufweisen in Gegenwart des erfindungsgemäßen Katalysators umgesetzt werden. Als Polyorganosiloxane, welche Silanolgruppen aufweisen, werden dabei vorzugsweise α,ω-Dihydroxypolydiorganosiloxane der allgemeinen Formel HO(SiR₂O)ᵣH und als Polyorganosiloxane, welche Triorganosiloxygruppen aufweisen α,ω-Triorganosiloxypolydiorganosiloxane der allgemeinen Formel R(R₂SiO)ₛSiR₃ eingesetzt, worin R unabhängig voneinander gleiche oder verschiedene gesättigte und/oder ungesättigte einwertige Kohlenwasserstoffreste mit 1 bis 6 Kohlenstoffatomen oder Wasserstoff darstellt, mit der Maßgabe daß nur ein Wasserstoff pro Silicium gebunden ist, sowie r und s einen Wert größer 2 bedeuten. Vorzugsweise werden α,ω-Dihydroxypolydimethylsiloxane sowie α,ω-Trimethylsiloxy-, α,ω-Dimethylvinylsiloxy- oder α,ω-Dimethylhydrosiloxypolydimethylsiloxane verwendet.

Nach der Kondensation und/oder Äquilibrierung in Gegenwart des erfindungsgemäßen Katalysators kann das erhaltene Polyorganosiloxan, das vorzugsweise eine Viskosität im Bereich von 1.10⁻¹ bis 10⁵ Pas aufweist, neutralisiert bzw. stabilisiert werden. Dafür können basisch oder nucleophil reagierende Verbindungen, wie z. B. Verbindungen mit Epoxygruppen, n-Butyllithium oder Amine, verwendet werden. Vorzugsweise wird dem erhaltenen Polyorganosiloxan nach Erreichen der Zielviskosität ein Amin der allgemeinen Formel R'ₙNH₃₋ₙ, worin R' gleiche oder verschiedene, gesättigte Kohlenwasserstoffreste mit 1 bis 10 Kohlenstoffatomen und/-oder R₃Si-Gruppen bedeutet, worin R unabhängig voneinander gleiche oder verschiedene, gesättigte oder ungesättigte Kohlenwasserstoffe mit 1 bis 6 Kohlenstoffatomen bedeutet und n Werte zwischen 1 und 3 annimmt, vorzugsweise in Mengen von 1 Gew.-ppm bis 1 Gew.-%, bezogen auf das Gewicht der eingesetzten Menge an Polyorganosiloxan, zugemischt. Bevorzugt kommen dabei Trialkylamin, wie z. B. Triisooctylamin, oder Hexaorganodisilazan, wie z. B. Hexamethyldisilazan oder Tetramethyl-divinyl-disilazan, zum Einsatz.

Der erfindungsgemäße Katalysator kann auch für zahlreiche weitere Kondensationsreaktionen unter Beteiligung von Silanolgruppen und/oder hydrolysierbaren Si-X-Gruppen, wie z. B. Alkoxy-, Acetoxy-, Amin-, Amido-, Aminoxy- oder Epoxygruppen, verwendet werden. Typische Reaktionen sind beispielsweise die Vernetzung von löslichen Silanol- und Alkoxygruppen enthaltenden Mono- und/oder Diorganosiloxanen zu unlöslichen Siliconharzen, die Herstellung von verzweigten flüssigen Siloxanen aus α,ω-Dihydroxypolydiorganosiloxanen und Silanen und/oder Siloxanen mit mindestens drei hydrolysierbaren Gruppen sowie die Beschleunigung der Kondensationsvernetzung von Siliconkautschuk.

Neben der Herstellung von polymeren Produkten können die erfindungsgemäßen Katalysatoren weiterhin zur Herstellung monomerer und oligomerer Verbindungen eingesetzt werden. Beispiel dafür ist die Synthese von definierten, niedermolekularen Siloxanen aus Silanolen und/oder Alkoxysilanen. Dabei ist die hohe Aktivität der erfindungsgemäßen Katalysatoren, verglichen mit sauren oder basischen, von besonderem Vorteil.

Der erfindungsgemäße, Silicium, Phosphor, Sauerstoff, Stickstoff und gegebenenfalls Chlor enthaltende Katalysator ist hervorragend zur Herstellung von Organosiloxanen und Polyorganosiloxanen einsetzbar. Er ist lösungsmittelfrei, klar und farblos, verändert Aktivität und Viskosität auch über einen längeren Zeitraum und unter Feuchtigkeitseinwirkung nicht und kann mit verschiedenen Viskositäten sowie katalytischen Aktivitäten bereitgestellt werden. Ein großer Vorteil des erfindungsgemäßen Katalysators ist die beliebige Einstellung seines Chlor-Gehaltes. Weiterhin ist er in den eingesetzten Polyorganosiloxanen in jedem Verhältnis löslich. Die erfindungsgemäßen Katalysatoren besitzen, auch bei deutlich niedrigeren Chlorgehalten, im Vergleich zu reinen Phosphornitrilchloriden, die als Lösungen in Methylenchlorid zur Anwendung kommen, gleiche oder höhere Aktivitäten bei Polykondensationsreaktionen.

### Ausführungsbeispiele

### A Herstellung von Verbindungen der allgemeinen Formel (I)

### A - 1 Herstellung von Tris(trimethylsilyl)phosphat

In einem 2,5 l Sulfierkolben, ausgerüstet mit Tropftrichter, Rührer, Thermometer und JUNGE-Destillationsaufsatz mit Intensivkühler, wurden 2133 g Trimethylchlorsilan vorgelegt. Gekühlt wurde durch Kühlsole (-15 °C) mit Hilfe eines Kryostaten. Gleichzeitig wurde das vorgelegte Trimethylchlorsilan bis zum schwachen Rückfluß erhitzt. Unter Rühren wurden über den Tropftrichter 400 g Orthophosphorsäure (85%ig) mit einer Geschwindigkeit von 100 ml/h ≈ ca.175 g/h zudosiert. Der entweichende Chlorwasserstoff durchströmte den Kühler, in dem mitgerissenes Trimethylchlorsilan weitgehend kondensierte und zum Reaktionsgut zurückfloß, passierte nacheinander die Über- und Unterdrucksicherung sowie den Blasenzähler und wurde anschließend durch das in zwei Waschflaschen vorgelegte Wasser absorbiert. Nach Zugabe der Orthophosphorsäure wurde das Reaktionsgut 12 h unter Rückfluß und unter schrittweiser Erhöhung der Sumpftemperatur auf ca. 110 °C belassen. Nach Abkühlung erfolgte in einer anschließenden Vakuumdestillation bei 30 mbar die Entflüchtigung des Reaktionsproduktes bis zu einer Sumpftemperatur von 60°C. Das Zielprodukt fällt in Form des Destillationsrückstandes in einer Menge von 1,077 kg an und wurde durch ³¹P-NMR-Untersuchungen eindeutig als Tris(trimethylsilyl)phosphat nachgewiesen.

### A - 2 Herstellung von Tris(dimethylvinylsilyl)phosphat

Analog Beispiel 1, mit dem Unterschied, daß als Triorganohalogensilan 2369 g Dimethylvinylchlorsilan eingesetzt wurden. Man erhielt 1225 g Tris(dimethylvinylsilyl)phosphat.

### A - 3 Herstellung von Tris(trimethylsiloxypolydimethylsiloxanyl)phosphat

Zur Umsetzung mit den Organocyclosiloxanen wurden 10 g des Tris-(trimethylsilyl)phosphates mit 90 g Polydimethylcyclosiloxanen, die 3 bis 6 Siloxaneinheiten enthielten, gemischt und 2 Stunden bei 80 °C belassen. Währendessen stieg die Viskosität des Produktes auf ca. 30 mPas.

### A - 4 Herstellung von Tris(dimethylvinylsiloxypolydimethylsiloxanyl)phosphat

Analog Beispiel 3, mit dem Unterschied, daß als Tris(triorganosilyl)phosphat 10 g Tris(dimethylvinylsilyl)phosphat eingesetzt wurden. Nach 2 Stunden bei 80 °C stellte sich eine Viskosität von ca. 30 mPas ein.

### B Herstellung der Katalysatoren

Alle Arbeiten zur Herstellung des Katalysators wurden mit völlig trockenen Glasgeräten und unter Ausschluß von Luftfeuchtigkeit (trockene Stickstoffatmosphäre) durchgeführt.

### Phosphornitrilchlorid

Das als Ausgangsprodukt eingesetzte Phosphornitrilchlorid (PN) wurde in Anlehnung an US 3 839 388 wie folgt hergestellt: In einem 1,5 l-Sulfierkolben, ausgestattet mit Rührer, Prahl-Aufsatz, Thermometer, Tropftrichter und Intensivkühler, wurden 99,1 g 1,2,3-Trichlorpropan, 3,8 g Ammoniumchlorid und 32,8 g Phosphorpentachlorid während 30 min bei Raumtemperatur durch intensives Rühren miteinander vermischt. Unter ununterbrochenem Rühren wurde das Reaktionsgemisch zunächst 6 h lang auf 130 °C und danach weitere 6 h lang auf 150 °C erhitzt. Die bei der Reaktion entstehenden 13,7 g Chlorwasserstoff wurden in einer nachgeschalteten und mit Wasser gefüllten Waschflasche absorbiert. Nach beendeter Reaktion und Abkühlung des Reaktionsgemisches auf Raumtemperatur wurde bei einem Druck von 5 mbar und bis zu einer Sumpftemperatur von 130 °C das Lösungsmittel abdestilliert. Die erhaltenen 20 g Phosphornitrilchlorid entsprachen der allgemeinen Formel

[Cl₃P=N(-PCl₂=N-)ₓPCl₃]+*[P_{y}Cl_{5y+1}]⁻,

worin x eine ganze Zahl größer/gleich 0 und y = 0 oder 1 bedeutet. Zur weiteren Umsetzung konnte beliebig, z.B. mit Methylenchlorid, verdünnt werden.

### Katalysator "A"

25 ml (=36,05 g) einer 30 Vol.-%igen Phosphornitrilchloridlösung in Methylenchlorid wurden mit 15 g Tris(trimethylsilyl)phosphat vermischt und 3 h bei Raumtemperatur gerührt. Anschließend wurden bei einem Druck von 600 mbar und einer Temperatur von 40 °C 31,2 g eines Gemisches aus Trimethylchlorsilan und Methylenchlorid, das 4,40 g Trimethylchlorsilan enthielt, abdestilliert. 0,5 g des auch als Konzentrat bezeichneten Sumpfproduktes wurden mit 33,5 g cyclischen Polydimethylsiloxanen vermischt. Das erhaltene Reaktionsprodukt ist ein anwendungsfertiger Katalysator, wobei die Konzentration des umgesetzten Phosphornitrilchlorides 0,5 Gew.-% beträgt.

### Katalysator "B"

25 ml einer 30 Vol.-%igen Phosphornitrilchloridlösung in Methylenchlorid wurden mit 3,75 g Tris(trimethylsilyl)phosphat vermischt und 3 h bei Raumtemperatur gerührt. Anschließend wurden bei einem Druck von 600 mbar und einer Temperatur von 40 °C 28,4 g eines Gemisches aus Trimethylchlorsilan und Methylenchlorid, das 2,29 g Trimethylchlorsilan enthielt, abdestilliert. 0,5 g des auch als Konzentrat bezeichneten Sumpfproduktes werden mit 65,5 g cyclischen Polydimethylsiloxanen vermischt. Das erhaltene Reaktionsprodukt ist ein anwendungsfertiger Katalysator, wobei die Konzentration des umgesetzten Phosphornitrilchlorides 0,5 Gew.-% beträgt.

### Katalysator "C"

10 ml (=14,4 g) einer 30 Vol.-%igen Phosphornitrilchloridlösung in Methylenchlorid wurden mit 15 g Tris(trimethylsilyl)phosphat vermischt und 3 h bei Raumtemperatur gerührt. Anschließend wurden bei einem Druck von 600 mbar und einer Temperatur von 40 °C 13,4 g eines Gemisches aus Trimethylchlorsilan und Methylenchlorid, das 2,29 g Trimethylchlorsilan enthielt, abdestilliert. 1,5 g des auch als Konzentrat bezeichneten Sumpfproduktes werden mit 48,5 g cyclischen Polydimethylsiloxanen vermischt. Das erhaltene Reaktionsprodukt ist ein anwendungsfertiger Katalysator, wobei die Konzentration des umgesetzten Phosphornitrilchlorides 0,5 Gew.-% beträgt.

### Katalysator "D"

5,6 g Phosphornitrilchlorid wurden mit 2,24 g Tris(trimethylsilyl)phosphat vermischt und 0,5 h bei einer Temperatur von 60 C gerührt. Anschließend wurden bei einem Druck von 12 mbar und einer Temperatur von 60 °C 1,3 g Trimethylchlorsilan abdestilliert. Das auch als Konzentrat bezeichnete Sumpfprodukt wurde mit 1113,5 g eines Gemisches aus cyclischen Polydimethylsiloxanen, das als Hauptkomponente Octamethylcyclotetrasiloxan enthielt, vermischt. Das erhaltene Reaktionsprodukt ist ein anwendungsfertiger Katalysator, wobei die Konzentration des umgesetzten Phosphornitrilchlorides 0,5 Gew.-% beträgt.

### Katalysator "E"

2,5 g Phosphornitrilchlorid wurden mit 17,6 g Tris(trimethylsilyl)phosphat vermischt und 0,5 h bei einer Temperatur von 60 °C gerührt. Anschließend wurden bei einem Druck von 12 mbar und einer Temperatur von 60 °C 3,57 g Trimethylchlorsilan abdestilliert. Das auch als Konzentrat bezeichnete Sumpfprodukt wurde mit 483,5 g eines Gemisches aus cyclischen Polydimethylsiloxanen, das als Hauptkomponente Octamethylcyclotetrasiloxan enthielt, vermischt. Das erhaltene Reaktionsprodukt ist ein anwendungsfertiger Katalysator, wobei die Konzentration des umgesetzten Phosphornitrilchlorides 0,5 % beträgt.

### Katalysator "F"

5,6 g Phosphornitrilchlorid wurden mit 3,53 g Tris(trimethylsilyl)phosphat vermischt und 0,5 h bei einer Temperatur von 60 °C gerührt. Das auch als Konzentrat bezeichnete Reaktionsprodukt wurde mit 1110,9 g eines Gemisches aus cyclischen Polydimethylsiloxanen, das als Hauptkomponente Octamethylcyclotetrasiloxan enthielt, vermischt. Das erhaltene Reaktionsprodukt ist ein anwendungsfertiger Katalysator, wobei die Konzentration des umgesetzten Phosphornitrilchlorides 0,5 Gew.-% beträgt.

### Katalysator "X" (Vergleichskatalysator)

0,5 Vol.-%ige Lösung von Phosphornitrilchlorid in Methylenchlorid.

### C Anwendung der Katalysatoren

Die nachstehend beschriebenen Versuchsserien sollen die Eigenschaften der hergestellten Katalysatoren illustrieren. Alle angegebenen Viskositäten sind auf 25 °C bezogen.

### I. Kontinuierliche Herstellung linearer Polyorganosiloxane (bevorzugte Ausführungsform)

### Beispiel 1

Ein Labor-Dünnschichtverdampfer mit einer Verdampfungsfläche von 0,06 m² wurde kontinuierlich mit 1,98 kg/h eines α,ω-Dihydroxypolydimethylsiloxanes einer Viskosität von 160 mPas sowie mit 0,7932 ml/h der gemäß Beispiele "A" bis "X" hergestellten Katalysatoren beschickt. Die Temperatur auf der Verdampfer-Oberfläche betrug 140 °C, der Druck betrug 80 mbar und die Rotordrehzahl wurde auf 400 U.min⁻¹ eingestellt. Das Polymer wurde kontinuierlich mit 0,8 g/min einer 0,025 Gew.-%igen Lösung von Triisooctylamin in einem α,ω-Dihydroxypolydimethylsiloxanes einer Viskosität von 160 mPas stabilisiert. Die Viskosität des Polymers wurde mit einem Prozeßviskosimeter gemessen und auf eine Temperatur von 25 °C umgerechnet. Die unter Beibehaltung dieser Bedingungen gemessene Viskosität kann als Maß für die Reaktionsgeschwindigkeit angesehen werden und gibt demzufolge auch die relative Aktivität des verwendeten Katalysators an. Die Eigenschaften der Katalysatoren "A" bis "X" und die damit erzielten Ergebnisse sind in Tabelle 1 zusammengefaßt.

**Tabelle 1:**

| Katalysator | Verhältnis PN:Silylphosphat | ursprüngl. Cl-Gehalt ¹) [Gew.-%] | Cl-Gehalt nach Cl-Entfernung [Gew.-%] | relative Cl-Gehaltserniedrigung [%] | erreichte Viskosität [Pas] |
|---|---|---|---|---|---|
| A | 0,5 | 0,37 | 0,276 | 25,3 | 20 |
| B | 2 | 0,38 | 0,330 | 13,2 | 25 |
| C | 0,2 | 0,38 | 0,255 | 32,9 | 21 |
| D | 2,5 | 0,36 | 0,324 | 10,0 | 25 |
| E | 0,14 | 0,37 | 0,143 | 61,4 | 20 |
| F | 0,63 | 0,37 | 0,37 | 0 | 20 |
| X | - | 0,38 | 0,38 | 0 | 10-21 ²) |

| | | | | | |
|---|---|---|---|---|---|
| ¹) umgerechnet auf gebrauchsfertigen Katalysator, der 0,5 Gew.-% zur Umsetzung gebrachtes Phosphornitrilchlorid enthält | | | | | |
| ²) starke Schwankungen durch Instabilität der Reaktion wegen inhomogener Verteilung des Katalysators | | | | | |

### Beispiel 2

Ein Labor-Dünnschichtverdampfer mit einer Verdampfungsfläche von 0,06 m² wurde kontinuierlich mit 2,12 kg/h einer Mischung aus 90 Gew.-% eines α,ω-Dihydroxypolydimethylsiloxanes einer Viskosität von 160 mPas und 7 Gew.-% eines α, -Trimethylsiloxypolydimethylsiloxanes einer Viskosität von 50 mPas sowie mit 4,24 ml/h der gemäß Beispiele "A" bis "X" hergestellten Katalysatoren beschickt. Die Temperatur auf der Verdampfer-Oberfläche betrug 120 °C, der Druck betrug 1 mbar und die Rotordrehzahl wurde auf 200 U.min⁻¹ eingestellt. Das Polymer wurde kontinuierlich mit 1,4 g/min einer 0,25 Gew.-%igen Lösung von Triisooctylamin in einem α, -Trimethylsiloxypolydimethylsiloxanes einer Viskosität von 50 mPas stabilisiert. Die Viskosität des Polymers wurde mit einem Prozeßviskosimeter gemessen und auf eine Temperatur von 25 °C umgerechnet. Die Minimierung des Gehaltes an siliciumgebundenen OH-Gruppen, der unter Beibehaltung dieser Bedingungen gemessen wurde, kann als Maß für die Reaktionsgeschwindigkeit angesehen werden und gibt demzufolge auch die relative Aktivität des verwendeten Katalysators an.

Die mit den Katalysatoren "A" bis "X" erzielten Ergebnisse bei Kondensationsreaktionen zur Herstellung von linearen Polyorganosiloxanen einer Zielviskosität von 10 000 mPas sind in Tabelle 2 zusammengefaßt.

**Tabelle 2:**

| Katalysator | Viskosität [mPas] | Gehalt an siliciumgebundenen OH-Gruppen [ppm] |
|---|---|---|
| A | 11200 | 25 |
| B | 9900 | 15 |
| C | 10500 | 25 |
| D | 9850 | 10 |
| E | 10250 | 20 |
| F | 10350 | 30 |
| X | 11720 | 45 |

Wie aus Tabelle 2 ersichtlich, ist der Silanolgehalt der mit den erfindungsgemäßen Katalysatoren "A" bis "G" hergestellten linearen Polyorganosiloxane niedriger als bei Verwendung des nicht erfindungsgemäßen Katalysators "X". Damit ist die höhere Aktivität der erfindungsgemäßen Katalysatoren nachgewiesen.

### II. Diskontinuierliche Herstellung linearer Polyorganosiloxane

### Beispiel 3

In einem 350 ml Sulfierkolben, ausgestattet mit Dissolverrührer, Innenthermometer und Destillieraufsatz, wurden 150 g eines α,ω-Dihydroxypolydimethylsiloxanes einer Viskosität von 160 mPas bei 25 °C unter Rühren auf 100 °C erwärmt. Nach Zugabe von 300 µl des Katalysators "F" wurde der Druck im Reaktionsgefäß auf 100 mbar abgesenkt. Nach 5 min, gemessen vom Zeitpunkt der Katalysatorzugabe, wurde das Reaktionsgefäß belüftet. Innerhalb weiterer 5 min wurden 4,5 µl Triiosooctylamin eingemischt. Das erhaltenene α,ω-Dihydroxypolydimethylsiloxan wies eine Viskosität von 293 Pas bei 25 °C auf.

### Beispiel 4

In einem 350 ml Sulfierkolben mit Dissolverrührer, Innenthermometer und Destillieraufsatz wurden 150 g einer Mischung aus 96,5 Gew.-% α,ω-Dihydroxypolydimethylsiloxan einer Viskosität von 160 mPas bei 25 °C und 3,5 Gew.-% α,ω-Bis-(Trimethylsiloxy)-polydimethylsiloxan mit 4,76 Gew.-% Trimethylsiloxy-Einheiten unter Rühren auf 100 °C erwärmt. Nach Zugabe von 0,6 ml des Katalysators "F" wurde der Druck im Reaktionsgefäß auf 20 mbar abgesenkt. Nach 30 min, gemessen vom Zeitpunkt der Katalysatorzugabe, wurde das Reaktionsgefäß belüftet. Danach wurden 5,4 µl Hexamethyldisilazan untergemischt.
Das erhaltene α,ω-Bis-(Trimethylsiloxy)-polydimethylsiloxan wies eine Viskosität von 16 700 mPas bei 25 °C und einen IR-spektroskopisch ermittelten Gehalt an siliziumgebundenen Hydroxylgruppen von <30 ppm auf.

### III. Kontinuierliche Herstellung von hochmolokularen Polyorganosiloxanen

### Katalysator "H"

20 ml einer 10 Vol.-%igen Phosphornitrilchloridlösung in Methylenchlorid wurden mit 8 g des Reaktionsproduktes aus einem Teil Tris(trimethylsilyl)phosphat und neun Teilen Cyclengemisch aus Beispiel 1 vermischt. Nach ca. drei stündigem Stehen bei Raumtemperatur wurden weitere 90 g Cyclengemisch der bekannten Zusammensetzung hinzugefügt. Nach weiteren, ca. zwei stündigem Stehen wurde eine farblose und völlig klare Lösung erhalten. Das Methylenchlorid wurde durch Vakuumdestillation bei ≤10 mbar und max. 50 °C entfernt. Das erhaltene Produkt wies eine Viskosität von ca. 1.000 mPas bei 25 °C auf, die Konzentration des umgesetzten Phosphornitrilchlorides betrug 2 Gew.-%.

### Beispiel 5

In einem beheizten Zweiwellen-Vakuumkneter wurden vermischt und auf 100 °C erwärmt: 8,0 kg α,ω-Dihydroxypolydimethylsiloxan einer Viskosität von 160 mPas bei 25 °C, 0,02 kg α,ω-Bis-(Dimethylvinylsiloxy)-dimethylsiloxan mit 10 Gew.-% Dimethyl-vinylsiloxy-Einheiten und 0,12 kg α,ω-Dihydroxypolymethylvinylsiloxan einer Viskosität von 9500 mPas bei 25 °C, das 4,7 Gew.-% siliziumgebundene Vinylgruppen enthielt. Nach Zugabe von 8 g des Katalysators "H" wurde der Druck im Kneter auf 9 mbar abgesenkt. Nach einer Reaktionszeit von zwei Stunden wurde mit Stickstoff belüftet und anschließend 8 g Tetramethyldivinyldisilazan eingemischt. Nach weiteren zwei Stunden wurde der Druck im Reaktionsraum auf 4 mbar abgesenkt und die Mischung eine Stunde bei 120 °C geknetet.
Das erhaltene α,ω-Bis-(Dimethylvinylsiloxy)-polydimethylsiloxymethylvinylsiloxan wies eine Viskosität von 56 000 Pas bei 25 °C auf. Als Nachweis für eine weitestgehende Freiheit von siliziumgebundenen Hydroxylgruppen wurden 3 g einer Mischung aus 20 Gew.-% Dibutylzinnlaurat und 80 Gew.-% Tetraethoxysilan in 60 g des auf die beschriebene Weise erhaltenen Polysiloxanes in einem Plastografen bei einer Prüftemperatur von 20 ±1 °C während einer Stunde eingearbeitet. Es wurde kein Viskositätsanstieg beobachtet.

### IV. Herstellung verzweigter Polyorganosiloxane

### Beispiel 6

400 Gew.-Teile eines α,ω-Dihydroxypolydimethylsiloxanes einer Viskosität von 70 mPas, 40 Gew.-Teile eines α,ω-Trimethylsiloxypolydimethylsiloxanes einer Viskosität von 40 mPas, 4 Gew.-Teile Methyltrimethoxysilan und ein Gew.-Teil Katalysator "D" wurden auf 100 °C erhitzt. Im Verlauf von 20 min. wurde der Druck auf 35 mbar abgesenkt. Danach erfolgte die Neutralisation des Katalysators mit 0,015 Gew.-Teilen Triisooctylamin. Das erhaltene Polysiloxan wies eine Viskosität von 19 000 mPas auf.

### Beispiel 7

Eine Mischung aus 80 Gew.-Teilen eines α,ω-Dihydroxypolydimethylsiloxanes einer Viskosität von 50 000 mPas, 160 Gew.-Teilen eines α,ω-Trimethylsiloxypolydimethylsiloxanes einer Viskosität von 1000 mPas und 4,5 Gew.-Teile einer pyrogenen, hydrophilen Kieselsäure mit einer Oberfläche von 150 m²/g wurden in Gegenwart von 1 Gew.-Teil Katalysator "D" 30 min auf 115 °C erhitzt. Nach Neutralisation mit 0,015 Gew.-Teilen Triisooctylamin wurde ein Polyorganosiloxan einer Viskosität von 6 800 mPas erhalten.

### Beispiel 8

Eine Mischung aus 80 Gew.-Teilen eines α,ω-Dihydroxypolydimethylsiloxanes einer Viskosität von 50 000 mPas, 160 Gew.-Teilen eines α,ω-Trimethylsiloxypolydimethylsiloxanes einer Viskosität von 1000 mPas und 7,7 Gew.-Teile einer 60 %igen toluolischen Lösung eines Methylsiliconharzes aus (CH₃)₃SiO_{1/2}- und SiO_{4/2}-Einheiten im Verhältnis 0,8 zu 1 wurden in Gegenwart von 1 Gew.-Teil Katalysator "D" 30 min auf 115 °C erhitzt. Nach Neutralisation mit 0,015 Gew.-Teilen Triisooctylamin wurde ein Polyorganosiloxan einer Viskosität von 2 550 mPas erhalten.

### Beispiel 9

Eine Mischung aus 27 Gew.-Teilen eines α,ω-Dihydroxypolydimethylsiloxanes einer Viskosität von 12 500 mPas, 57 Gew.-Teilen eines α,ω-Trimethylsiloxypolydimethylsiloxanes einer Viskosität von 1000 mPas und 5,4 Gew.-Teile eines Ethylpolysilicates mit 40 Gew.-% SiO₂ wurden in Gegenwart von 1 Gew.-Teil Katalysator "D" 30 min auf 115 °C erhitzt. Nach Neutralisation mit 0,015 Gew.-Teilen Triisooctylamin wurde ein Polyorganosiloxan einer Viskosität von 5 300 mPas erhalten.

### Anwendung der verzweigten Polyorganosiloxane

In 190 g der aus den Beispielen 3 bis 6 erhaltenen Polyorganosiloxane wurden 5 Gew.-% hydrophober Kieselsäure mit einer BET-Oberfläche von 90 m²/g 30 min mittels einer Dissolverscheibe bei 1900 U/min untergemischt und ihre Wirkung als Entschäumer beurteilt. Sowohl in Gegenwart von stark schäumenden anionischen Tensiden als auch in Gegenwart von hohen Konzentrationen an nichtionischen Tensiden wiesen die mit dem erfindungsgemäßen Katalysator hergestellten Polyorganosiloxane hervorragende Entschäumerwirksamkeiten, auch bei geringen Zusatzmengen, auf.

## Patentansprüche

1. Katalysator zur Herstellung von Organosiloxanen oder Polyorganosiloxanen, erhalten durch
Umsetzung von Phosphornitrilchlorid mit einer Verbindung der allgemeinen Formel
[R₃SiO(R₂SiO)ₘ]₃P=O (I),
worin R unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 1000 annimmt.

2. Katalysator nach Anspruch 1, dadurch gekennzeichnet, daß sich während der Umsetzung bildende, leichtflüchtige, Chlor enthaltende Silicium-Verbindungen vollständig oder teilweise abgetrennt werden.

3. Katalysator nach Anspruch 2, dadurch gekennzeichnet, daß der Chlorgehalt des Katalysators durch Abtrennung der sich während der Umsetzung bildenden, leichtflüchtigen, Chlor enthaltenden Silicium-Verbindungen eingestellt wird.

4. Katalysator nach Anspruch 2, dadurch gekennzeichnet, daß sich der Chlorgehalt um 1 bis 95 Gew.-%, bezogen auf die eingesetzte Menge Chlor im Phosphornitrilchlorid, verringert.

5. Katalysator nach Anspruch 4, dadurch gekennzeichnet, daß sich der Chlorgehalt um 10 bis 60 Gew.-%, bezogen auf die eingesetzte Menge Chlor im Phosphornitrlchlorid, verringert.

6. Katalysator nach Anspruch 1, dadurch gekennzeichnet, daß das Verhältnis von Trialkylsiloxy- zu Dialkylsiloxy-Einheiten in der eingesetzten Verbindung der allgemeinen Formel (I) dem eines Polydiorganosiloxans mit Trialkylsiloxyendgruppen einer Viskosität von 500 bis 10 000 mPas entspricht.

7. Verfahren zur Herstellung der Verbindung der allgemeinen Formel
[R₃SiO(R₂SiO)ₘ]₃P=O (I),
worin m = 0 ist, dadurch gekennzeichnet, daß äquivalente Mengen an Triorganohalogensilan und Orthophosphorsäure umgesetzt werden, wobei in der Orthophophorsäure enthaltenes Wasser mit der äquivalenten Menge Triorganohalogensilan gebunden wird.

8. Verfahren nach Anspruch 7, dadurch gekennzeichnet, daß als Triorganohalogensilan Trimethylchlorsilan eingesetzt wird.

9. Verfahren nach Anspruch 7, dadurch gekennzeichnet, daß als Triorganohalogensilan Dimethylvinylchlorsilan eingesetzt wird.

10. Verfahren zur Herstellung der Verbindung der allgemeinen Formel
[R₃SiO(R₂SiO)ₘ]₃P=O (I),
worin m 3 bis 1000 beträgt, dadurch gekennzeichnet, daß ein Tris(triorganosiloxypolyorganosiloxanyl)phosphat der allgemeinen Formel (I), wobei m = 0 ist, mit einem oder mehreren Organocyclosiloxanen der allgemeinen Formel
(R₂SiO)_{q} (II),
worin R die im Anspruch 1 angegebenen Bedeutung besitzt und q Werte von 3 bis 12 annimmt, im Mol-verhältnis von 1 : 1 bis zu 500 : 1 umgesetzt wird.

11. Katalysator nach Anspruch 1, dadurch gekennzeichnet, daß der Katalysator vor Verwendung mit Organosiloxanen oder Polyorganosiloxanen, die keine kondensierbaren funktionellen Gruppen enthalten dürfen, auf die Einsatzkonzentration eingestellt wird.

12. Verwendung des Katalysators nach Anspruch 1 zur Herstellung von Organosiloxanen oder Polyorganosiloxanen, dadurch gekennzeichnet, daß die Organosiloxane oder Polyorganosiloxane durch Kondensation und/oder Äquilibrierung von einer oder mehreren Siliciumverbindungen der allgemeinen Formel
R¹ ₐ(R²O)_{b}SiO_{(4-a-b)/2} (III),
hergestellt werden, wobei R¹ gleiche oder verschiedene, gesättigte und/oder ungesättigte, substituierte und/oder unsubstituierte einwertige Kohlenwasserstoffreste mit 1 bis 30 Kohlenstoffatomen oder Wasserstoff mit der Maßgabe bedeutet, daß nur ein Wasserstoffatom pro Silicium gebunden ist, R² entweder Wasserstoff oder R¹ darstellt und (a+b) ganze oder gebrochene Zahlen größer 1 bedeutet, wobei mindestens ein Sauerstoff pro Molekül am Silicium gebunden ist.

13. Katalysator nach Anspruch 1 und 12, dadurch gekennzeichnet, daß der Katalysator in Mengen von 1 Gew.-ppm bis 1 Gew.-%, bezogen auf das Gewicht der jeweils eingesetzten Menge an Siliciumverbindungen, eingesetzt wird.

## Claims

1. Catalyst for preparing organosiloxanes or polyorganosiloxanes, obtained by reacting phosphonitrilic chloride with a compound of the general formula
[R₃SiO(R₂SiO)ₘ]₃P=O (I),
where R are, independently of one another, identical or different, unsaturated and/or saturated monovalent hydrocarbon radicals having from 1 to 6 carbon atoms or hydrogen, with the proviso that only one hydrogen atom is bonded to each silicon atom and m is from 0 to 1000.

2. Catalyst according to Claim 1, characterized in that volatile, chlorine-containing silicon compounds formed during the reaction are completely or partially removed.

3. Catalyst according to Claim 2, characterized in that the chlorine content of the catalyst is adjusted by removal of the volatile, chlorine-containing silicon compounds formed during the reaction.

4. Catalyst according to Claim 2, characterized in that the chlorine content decreases by from 1 to 95% by weight, based on the amount of chlorine in the phosphonitrilic chloride used.

5. Catalyst according to Claim 4, characterized in that the chlorine content decreases by from 10 to 60% by weight, based on the amount of chlorine in the phosphonitrilic chloride used.

6. Catalyst according to Claim 1, characterized in that the ratio of trialkylsiloxy to dialkylsiloxy units in the compound of the general formula (I) which is used corresponds to that of a polydiorganosiloxane having trialkylsiloxy end groups and a viscosity of from 500 to 10,000 mPas.

7. Process for preparing the compound of the general formula
[R₃SiO(R₂SiO)ₘ]₃P=O (I),
where m = 0, characterized in that equivalent amounts of triorganohalosilane and orthophosphoric acid are reacted, where the water present in the orthophosphoric acid is bound by the equivalent amount of triorganohalosilane.

8. Process according to Claim 7, characterized in that the triorganohalosilane used is trimethylchlorosilane.

9. Process according to Claim 7, characterized in that the triorganohalosilane used is dimethylvinylchlorosilane.

10. Process for preparing the compound of the general formula
[R₃SiO(R₂SiO)ₘ]₃P=O (I),
where m is from 3 to 1000, characterized in that a tris(triorganosiloxypolyorganosiloxanyl)phosphate of the general formula (I) where m = 0 is reacted with one or more organocyclosiloxanes of the general formula
(R₂SiO)₄ (II),
where R is as defined in Claim 1 and q is from 3 to 12, in a molar ratio of from 1 : 1 to 500 : 1.

11. Catalyst as claimed in Claim 1, characterized in that the catalyst is, prior to use, adjusted to the use concentration using organosiloxanes or polyorganosiloxanes which must contain no condensable functional groups.

12. Use of the catalyst according to Claim 1 for preparing organosiloxanes or polyorganosiloxanes, characterized in that the organosiloxanes or polyorganosiloxanes are prepared by condensation and/or equilibration of one or more silicon compounds of the general formula
R¹ ₐ(R²O)_{b}SiO(_{4-a-b)/2} (III),
where R¹ are identical or different, saturated and/or unsaturated, substituted and/or unsubstituted monovalent hydrocarbon radicals having from 1 to 30 carbon atoms or hydrogen, with the proviso that only one hydrogen atom is bonded to each silicon atom, R² is either hydrogen or R¹ and (a+b) is an integer or fractional number greater than 1, where at least one oxygen per molecule is bonded to silicon.

13. Catalyst according to Claim 1 or 12, characterized in that the catalyst is used in amounts of from 1 ppm by weight to 1% by weight, based on the weight of the silicon compounds used in each case.

## Revendications

1. Catalyseur pour fabriquer des organosiloxanes ou des polyorganosiloxanes, obtenus en transformant du chlorure phosphonitrilique avec un composé ayant la formule générale
[R₃SiO(R₂SiO)ₘ]₃P=O (I),
où les R représentent indépendamment les uns des autres des restes d'hydrocarbures, identiques ou différents, saturés et/ou insaturés de 1 à 6 atomes d'hydrocarbure ou d'hydrogène dans la mesure ou un seul atome d'hydrogène est lié par silicium et m prend une valeur entre 0 et 1000.

2. Catalyseur selon la revendication 1, caractérisé en ce que des composés de silicium contenant du chlore légèrement volatile se formant pendant la transformation, sont séparés entièrement ou partiellement.

3. Catalyseur selon la revendication 2, caractérisé en ce que la teneur en chlore du catalyseur est réglée par la séparation des composés de silicium contenant du chlore légèrement volatile se formant pendant la transformation.

4. Catalyseur selon la revendication 2, caractérisé en ce que la teneur en chlore diminue de 1 à 95 % en poids par rapport à la quantité de chlore utilisée dans le chlorure phosphonitrilique.

5. Catalyseur selon la revendication 4, caractérisé en ce que la teneur en chlore diminue de 10 à 60 % en poids par rapport à la quantité de chlore utilisée dans le chlorure phosphonitrilique.

6. Catalyseur selon la revendication 1, caractérisé en ce que le rapport entre les unités de trialcoïlsiloxy et de dialkylesiloxy dans le composé utilisé de la formule générale (I) correspond à celui d'un polydiorganosiloxane ayant des groupes terminaux de trialcoïlsiloxy d'une viscosité de 500 à 10 000 mPas.

7. Procédé de fabrication du composé de formule générale
[R₃SiO(R₂SiO)ₘ]₃P=O (I),
où m = 0, caractérisé en ce que des quantités équivalentes de triorganohalogénosilane et d'acide orthophosphorique sont transformées, l'eau de l'acide orthophosphorique étant liée à une quantité équivalente de triorganohalogénosilane.

8. Procédé selon la revendication 7, caractérisé en ce que du triméthylchlorosilane est utilisé comme triorganohalogénosilane.

9. Procédé selon la revendication 7, caractérisé en ce que du diméthylvinylchlorosilane est utilisé comme triorganohalogénosilane.

10. Procédé de fabrication du composé de formule générale
[R₃SiO(R₂SiO)ₘ]₃P=O (I),
où m se situe entre 3 et 1000, caractérisé en ce que un tris(triorganosiloxypolyorganosiloxanyl)phosphate de la formule générale (I), où m = 0, est transformé à un rapport molaire entre 1 : 1 jusqu'à 500 : 1 avec un ou plusieurs organocylosiloxanes de la formule générale
(R₂SiO)_{q} (II),
où R représente la valeur donnée dans la revendication 1 et où q prend une valeur entre 3 et 12.

11. Catalyseur selon la revendication 1, caractérisé en ce que le catalyseur est réglé sur la concentration utilisée avant de l'utiliser avec des organosiloxanes ou des polyorganosiloxanes qui ne doivent pas contenir de groupes fonctionnels condensables.

12. Utilisation du catalyseur selon la revendication 1 pour la fabrication d'organosiloxanes ou de polyorganosiloxanes, caractérisé en ce que les organosiloxanes ou les polyorganosiloxanes sont fabriqués par condensation et / ou par équilibration d'un ou de plusieurs composés de silicium de la formule générale
R¹ ₐ(R²O)_{b}SiO_{(4-a-b)/2} (III),
où R¹ représente des restes d'hydrocarbures monovalents identiques ou différents, saturés et/ou insaturés, substitués et/ou non substitués de 1 à 30 atomes d'hydrocarbure ou bien d'hydrogène dans la mesure où un seul atome d'hydrogène est lié par silicium, où R² représente soit de l'hydrogène ou R¹, et (a+b) des nombres entiers ou des fractions supérieurs à 1, un oxygène étant au moins lié par molécule au silicium.

13. Catalyseur selon les revendications 1 et 12, caractérisé en ce que le catalyseur est utilisé à des quantités de l'ordre de 1 ppm/poids à 1 % en poids par rapport au poids de chaque quantité de composés de silicium utilisée.
